# EUROPEAN PATENT SPECIFICATION

(11) **EP 3 893 187 B1**
(45) Date of publication and mention of the grant of the patent: **07.08.2024**
(21) Application number: 21167350.4
(22) Date of filing: 08.04.2021
(51) Int. Cl.: G06Q 50/18

(54) **A SYSTEM AND METHOD FOR TIME STAMPING AND TRANSFERRING INTELLECTUAL PROPERTY RIGHT**
SYSTEM UND VERFAHREN ZUM ZEITSTEMPELN UND ÜBERTRAGEN VON GEISTIGEN EIGENTUMSRECHTEN
SYSTÈME ET PROCÉDÉ DE MARQUAGE TEMPOREL ET DE TRANSFERT DE DROIT DE PROPRIÉTÉ INTELLECTUELLE

(30) Priority: 09.04.2020 HK 32020005574
(43) Date of publication of application: 13.10.2021
(73) Proprietor: Tectonic Technology Innovation Company Limited, Shatin (HK)
(72) Inventor: AU, Ka Leung, Shatin (HK); CHENG, Yue, Shatin (HK); LAM, Fung, deceased (HK)
(74) Representative: Beck & Rössig European Patent Attorneys

(56) References cited:
- CN-A- 109 299 943
- US-A1- 2019 005 595

## Description

### Field of the Invention

This invention relates a method for time stamping and transferring intellectual property right over computer system networks comprising the features of the preamble portion of claim 1. Further the invention relates to a system implementing said method.

### Background of the Invention

Intellectual property refers to creations of the mind wherein inventions, literary and artistic works, symbols, names and images used in commerce. The intellectual property rights allow creators or owners of patents, trademarks, copyrighted works to benefit from their own work or investment in a creation. Therefore, intellectual property protection turns innovative ideas, creative designs, and other intangible assets into valuable business assets that may contribute significantly to enhance a company's overall position in the market. In several key technology areas, some enterprises have begun to appreciate that their intellectual property assets are often even more valuable than their physical assets. Hence, if said intellectual property assets are valuable business assets, the protection of intellectual property could be considered as an investment.

Some of intellectual property do not need to do registration on the ownership, such as copyrights in Hong Kong. The proof of the original creation of the original artwork is necessary from time to time. Generally, all forms of intellectual property are transferable, either temporarily transferred under a license or permanently transferred by assignment. However, the process of transferring said intellectual property right may involve complicated steps, time and cost. This is because an official legal contract is needed to be composed and reviewed by lawyers, whereby will cost a lot and time consuming.

Several approaches in providing an open market for transferring intellectual property right digitally and electronically while preserving all the associated intellectual property rights have been disclosed in the prior arts. For example, United States Patent Application No. 8,799,175 B2 has disclosed a method of operating a computerized marketplace system. The website of the invention interacts with two classes of parties: vendors who are patent owners who wish to sell patent licenses; customers who are companies that may have present or future liability for infringing the vendor's patent(s), and may wish to purchase a patent license from the vendor. Through the website, customers can purchase paid-up, lump-sum licenses from the vendors. The website employs standard forms that ensure no hassles, no haggling, no strings and no worries. However, the whole transaction of said computerized marketplace system is only involving in between vendor and customer. As such, there will be no service provider such as legal advisor to assist in the system to compose a comprehensive legal agreement to avoid litigation in future. The disclosed invention provides standard licensing contract which does not facilitate the composition of the agreement if any negotiation between the buyer and the seller occurs.

United States Patent Application No. 20160371803 has disclosed a method of aggregating and valuing intellectual property in a financial exchange. The invention provides means whereby holders of intellectual property rights may sell or license intellectual property to an aggregator and receive shares of stock or cash for the contribution based on the aggregated value of the intellectual property held by the aggregator. The method is more particularly to create a publicly traded security in an intellectual property aggregator. However, the method for aggregating intellectual property comprising the step of transferring-in a plurality of intellectual property rights from a holder to an aggregator; and transferring-out the intellectual property rights to one or more acquirers. This method may require complicated transactions because the transfer-in must be completed by selling or licensing to the aggregator.

United States Patent Application No. 20090024513 A1 disclosed a method for transacting intellectual property includes the steps of licensing an IP right corresponding to an IP asset to a licensee according to an agreement; receiving a payment from the licensee for the IP right according to terms of the agreement; and if a call or put option provision in the agreement is exercised, then receiving payment of the strike price and transferring ownership of the IP asset to the licensee. The call option provision provides the licensee the right to purchase the IP asset at a predetermined strike price within a specified time period. The put option provision provides the IP owner a right to sell the IP asset at a predetermined strike price. However, this transaction method may not provide strong legal evidence due to lack of signatory from respective parties.

According to existing prior arts, there is a need to have an improved and customized digital agreement for transferring intellectual property right, which is simple, easy to use and thus able to have effective method of transferring intellectual property right.

A method for time stamping and transferring intellectual property rights over computer system networks comprising the features of the preamble portion of claim 1 and a related system are known from CN 109 299 943 A, which teaches using blockchain technology in relation to transferring intellectual property right. However, in CN 109 299 943 A, blockchain merely serves the function to store material, information and a smart contract.

Another method for transferring intellectual property rights while using blockchain technology is known from US 2017/005595A1. Processing nodes each include one or more processors configured to: receive identification information from one or more sellers associated with intellectual property (IP), receive identification information associated with the one or more sellers, verify the identification information associated with the IP and the identification information associated with the one or more sellers by referencing an intellectual property database, and convert the IP into a Smart IP Contract, wherein the Smart IP Contract performs one or more functions to carry out a sale of the IP on a cryptographic blockchain network.

### Summary of Invention

It is an objective of the present invention to provide an alternative simple and easy method to time stamp and transfer intellectual property right with a distributed manner and immutable records.

This technical problem is solved by the method of claim 1 and the system of claim 12. Advantageous embodiments are indicated in further claims.

### Brief Description of the Drawings

The features of the invention will be more readily understood and appreciated from the following detailed description when read in conjunction with the accompanying drawings of the preferred embodiment of the present invention, in which:
Figure 1 shows a diagram of the system to transfer intellectual property right in present invention;
Figure 2 shows a flowchart of agreement between buyer and seller with offline payment;
Figure 3 shows a flowchart of agreement between buyer and seller with online payment;
Figure 4 shows a flowchart of agreement between buyer and seller with token payment;
Figure 5 shows a flowchart of agreement between service provider and client of buyer or seller with offline payment;
Figure 6 shows a flowchart of agreement between service provider and client of buyer or seller with online payment;
Figure 7 shows a flowchart of agreement between service provider and client of buyer or seller with token payment;
Figure 8 shows a diagram of time stamp and provide hash ID for uploading information and/or document;
Figure 9 shows a diagram of time stamp and provide hash ID for communicating content on the platform;
Figure 10 shows a diagram of the system to transfer intellectual property right from one intellectual property holder to one buyer;
Figure 11 shows a diagram of the system to transfer intellectual property right from one intellectual property holder to multiple buyers;
Figure 12 shows a diagram of the system to transfer intellectual property right from multiple intellectual property holders to one buyer;
Figure 13 shows a diagram of the system to transfer intellectual property right from multiple intellectual property holders to multiple buyers;
Figure 14 shows a customized digital agreement;
Figure 15 shows a diagram example of customized digital agreement.

### Detailed Description of the Invention

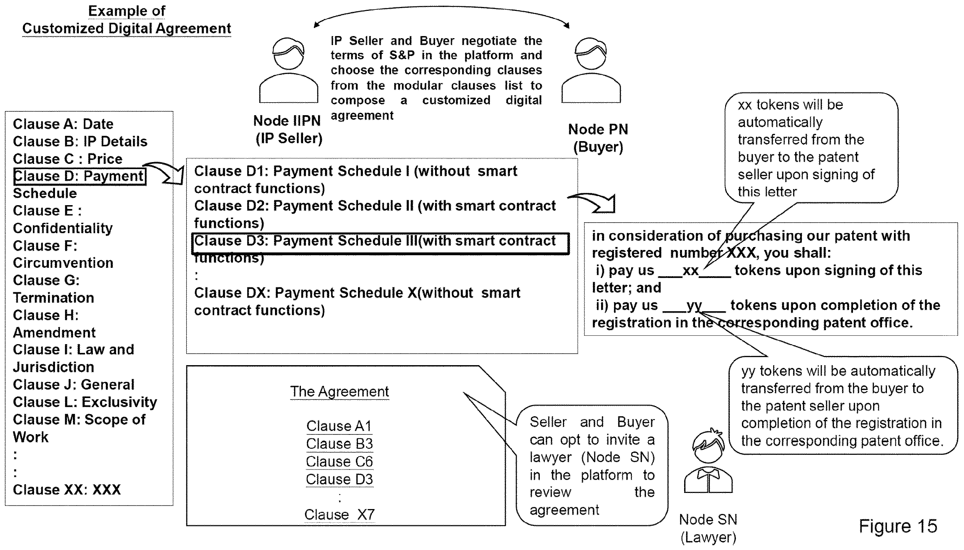

As required, detailed embodiments of the present invention are disclosed herein; however, it is to be understood that the disclosed embodiments are merely exemplary of the invention, which may be embodied in various forms. Therefore, specific structural and functional details disclosed herein are not to be interpreted as limiting but merely as a basis for claims. It should be understood that the drawings and detailed description thereto are not intended to limit the invention to the particular form disclosed, but on the contrary, the invention is to cover all modifications, equivalents and alternatives falling within the scope of the present invention as defined by the appended claims. As used throughout this application, the word "may" is used in a permissive sense (i.e., meaning having the potential to), rather than the mandatory sense (i.e., meaning must). Similarly, the words "include," "including," and "includes" mean including, but not limited to. Further, the words "a" or "an" mean "at least one" and the word "plurality" means one or more, unless otherwise mentioned. Where the abbreviations or technical terms are used, these indicate the commonly accepted meanings as known in the technical field. The present invention will now be described with reference to Figs. 15.

The present invention presents a computer implemented method for time stamping and transferring intellectual property right, characterized in that: enrolling plurality of corresponding nodes 100 to a platform 101; wherein the corresponding nodes 100 comprises administration node 100a, public node 100b, super node 100c, child node 100d, independent individual professor node 100e and service node 100f; uploading information and document of the corresponding intellectual property right to the platform 101 by independent individual professor node 100e, super node 100c or child node 100d; wherein time stamping the information and document upon uploaded to the platform 101; searching relevant intellectual property right on the platform 101; negotiating on the platform 101; composing a customized digital agreement 102 on the platform 101 by selecting, amending and/or adding on a relevant module clause; wherein the customized digital agreement 102 comprises smart contract functions for automating execution; signing 103 the agreed agreement digitally by respective corresponding parties; blocking 104 the target intellectual property right automatically for further selling; and completing 105 the trade information transaction upon receiving full payment.

In a preferred embodiment of the present invention, the intellectual property right comprises a patent, a trademark, a trade secret, an industrial design, a copyright and a geographical indication.

In a preferred embodiment of the present invention, the administration node 100a comprises an administrator, public node 100b comprises a buyer, super node 100c comprises a university and research institute, service node 100f comprises a service provider 106, child node 100d and independent individual professor node 100e comprises an inventor.

The content of the uploaded information, document and negotiation that involve any communications by nodes 100 is stored in a distributed file system based on hash table mapping approach. Each piece of stored information in the distributed ledger comprises a hash ID. The hash ID is then used to represent the real content to be mentioned in the transactions later recorded in the distributed ledger. Everyone can easily verify the real content with a hash ID. Said information and document include but not limited to writing, audio and video.

In a preferred embodiment of the present invention, the module clause comprises plurality of selection for respective parties to select, amend and/or add.

In a preferred embodiment of the present invention, the respective parties are optional to engage a service provider 106 for providing services including but not limited to marketing the patent, legal advices, valuation and writing descriptions. The service provider 106 includes but not limited to legal advisors, intellectual property valuers, writers, promoters, marketers, intellectual property agents, and other intellectual property services providers. Therefore, the platform 101 may comprise intellectual property sellers, buyers and service providers 106.

In a preferred embodiment of the present invention, the signing 103 of a customized digital agreement 102 comprises a one intellectual property holder with one buyer, a one intellectual property holder with multiple buyers, a multiple intellectual property holders with one buyer, a multiple intellectual property holders with multiple buyers, a service provider 106 with client or buyer or seller and in between the service providers 106. The platform 101 offers all the corresponding parties to use respective private key to do the digital signature on the customized digital agreement 102 to serve as a legal proof evidence upon infringements and disputes of intellectual property right occurs.

In a preferred embodiment of the present invention, the smart contract functions trigger fund transfer or other actions automatically after signage of the agreed customized digital agreement 102. Said the other actions comprise an issue of call option for another intellectual property rights, executing another digital agreement 102 and the like.

In a preferred embodiment of the present invention, the trade information transaction is the change of intellectual property ownership. The platform 101 in the present invention could link to the corresponding intellectual property offices for the registration of the change. The completion 105 of said trade information transaction depends on the necessity of registration in the corresponding intellectual property office.

In a preferred embodiment of the present invention, the payment comprises an offline payment, an online payment and a token payment.

The present invention presents a system of customized digital agreement for intellectual property time stamp and right transfer, comprising: means for selecting, amending and/or adding on a relevant module clause; and means for automating execution using smart contract functions.

Below is the example of the system and method for transferring intellectual property right, from which the advantages of the present invention may be more readily understood. It is to be understood that the following examples are for illustrative purpose only and should not be construed to limit the present invention in any way.

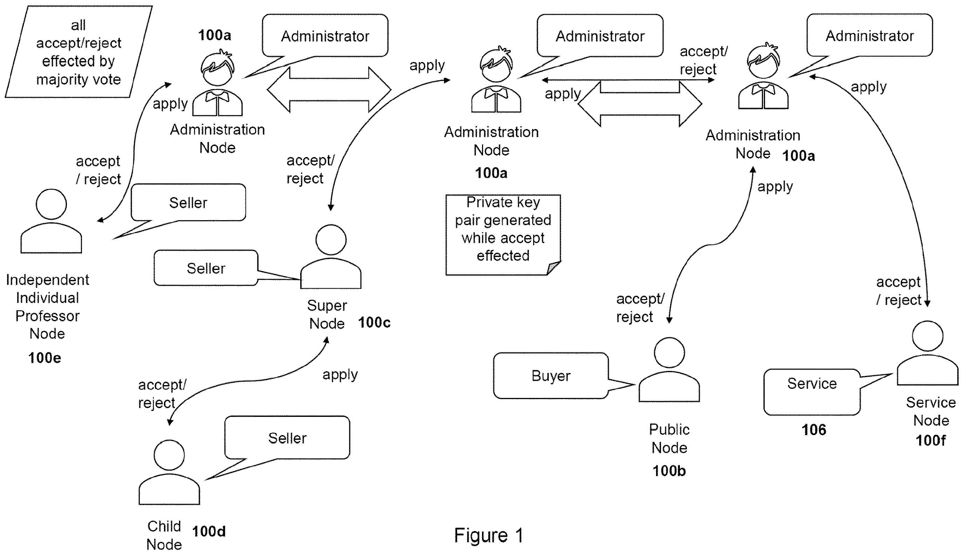

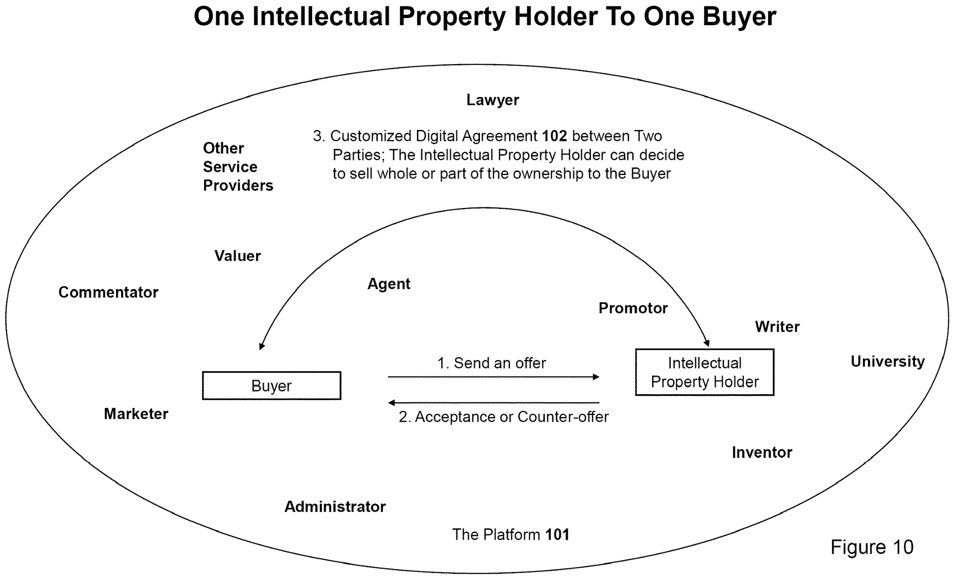

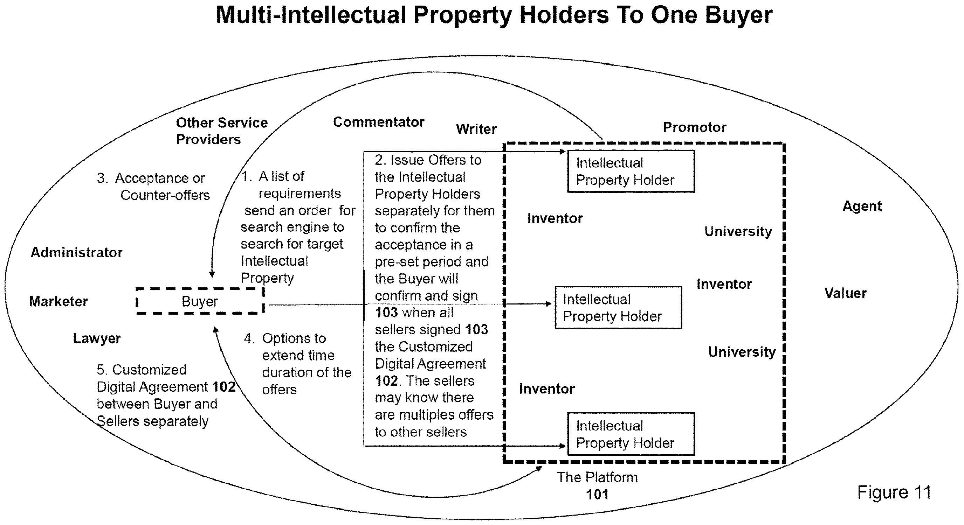

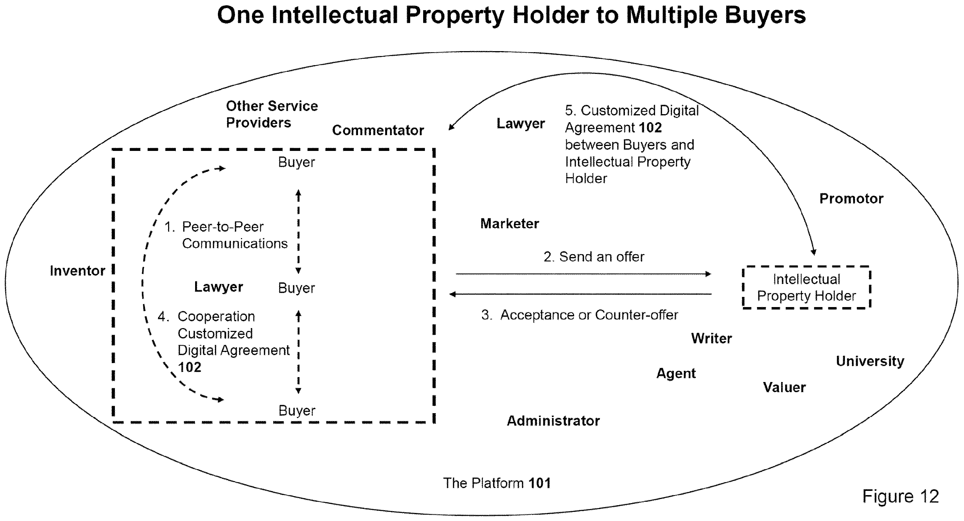

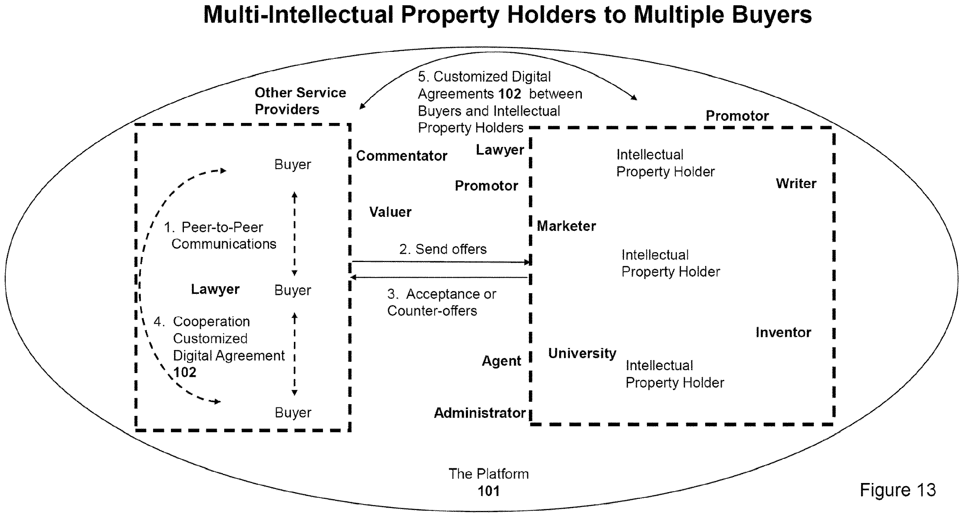

A diagram of the system to transfer intellectual property right is shown in Figure 1. Referring to Figure 1, the administration node 100a is connected to the sellers comprises independent individual professor node 100e, super node 100c and child node 100d. Also, the administration node 100a is further connected to the buyers comprises public node 100b and service node 100f. According to Figure 1, the four types of nodes, which independent individual professor node 100e, super node 100c, child node 100d and the public node 100b, are defined for an intellectual property transfer. The administration node 100a coordinates the intellectual property transfer. The transfer of intellectual property comprises a one intellectual property holder with one buyer, a one intellectual property holder with multiple buyers, a multiple intellectual property holders with one buyer and a multiple intellectual property holders with multiple buyers. A diagram of the system to transfer of intellectual property right from one intellectual property holder to one buyer is shown in Figure 10. One intellectual property buyer could send an offer to one intellectual property holder. One intellectual property holder could accept the offer by the intellectual property buyer or send counteroffer to the intellectual property buyer. Both the intellectual property buyer and the intellectual property holder could build a customized digital agreement 102. The intellectual property holder could decide to sell the whole or part of the ownership to the intellectual property buyer. According to Figure 11, a diagram of the system to transfer of intellectual property right from a multiple intellectual property holders to one buyer is shown. The buyer sends requirements to the search engine for searching target intellectual properties, then sends offers to multiple intellectual property holders separately. The multiple intellectual property holders could accept the offer or send counteroffer to the buyer. The buyer would confirm and sign the customized digital agreement 102 when every intellectual property holder signed the customized digital agreement 102. The intellectual property holders may know multiple offers sent to other intellectual property holders. The buyer could optionally extend the time duration of the offers. In Figure 12, a diagram of the system to transfer intellectual property from one intellectual property holder with multiple buyers is shown. Multiple buyers establish peer-to-peer communications and send offer to the intellectual property holder. The intellectual property holder accepts the offer or sends counteroffer to the multiple intellectual property buyers. Multiple intellectual property buyers cooperatively build a customized digital agreement 102. Both parties signed the customized digital agreement 102. The multiple buyers could share distribution of the proceeds upon disposal or economic benefits. In Figure 13, a diagram of the system to transfer intellectual property from multiple intellectual property holders with multiple buyers is shown. Multiple buyers establish peer-to-peer communications and send offer to the multiple intellectual property holders separately. The multiple intellectual property holders could accept the offer or send counteroffer to the multiple intellectual property buyers. Multiple intellectual property buyers cooperatively build a customized digital agreement 102. Both parties signed the customized digital agreement 102.

The platform 101 works with intellectual property lawyers to compose common modules of customized digital agreement 102 which are often to be used on an intellectual property transaction. The common modules are optional to be customized by the corresponding parties based on their needs and fill in parameters such as date, price, legal term duration and etcetera. Said corresponding parties can choose the common modules from a module library by selecting, amending and/or adding to build a legal contract by themselves. A customized digital agreement 102 is formulated based on the common modules selected. Any party can build a customized digital agreement 102 from the module library and propose to other parties. A digital signature is required for confirmation upon agree of the customized digital agreement 102. The target intellectual property will be automatically blocked for further selling by the seller. The transaction is completed 105 upon receiving full payment and change of ownership. The completion 105 of change ownership depends on the necessity of registration to the corresponding intellectual property office.

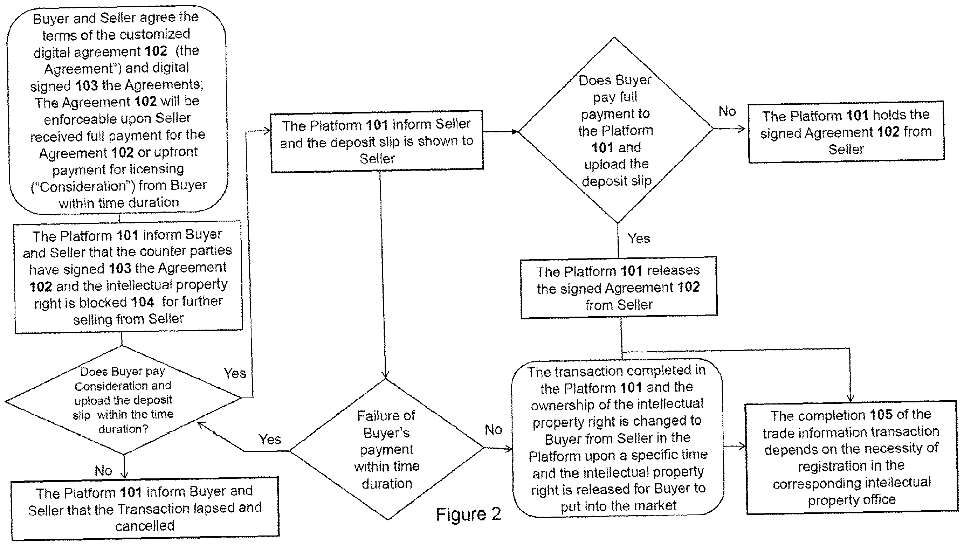

An agreement between buyer and seller with offline payment is shown in Figure 2. The customized digital agreement 102 between the buyer and seller is uploaded on the platform 101 in a distributed ledger in accordance with the terms of sales and purchase agreement.

Every corresponding parties could view the same customized digital agreement 102 whereby the buyer and seller can negotiate the terms in the customized digital agreement 102 via online or offline. The platform 101 will automatically block the target intellectual property right for further selling once both buyer and seller digitally signed 103 the customized digital agreement 102 and uploaded to the platform 101 in the distributed ledger. The blocking 104 duration for further selling can be determined case by case. The buyer is required to complete the payment and upload the proof of payment to the distributed ledger within the blocking 104 duration to complete 105 the transaction. The transaction will be cancelled if the buyer fails to complete payment within the blocking 104 duration. The platform 101 will change the ownership of the intellectual property right from the seller to the buyer upon payment confirmation. Hence, the intellectual property right is released for buyer to put into the market. The whole process in this distributed ledger is witnessed by all the corresponding parties. The completion 105 of the trade information transaction depends on the necessity of registration in the corresponding intellectual property office.

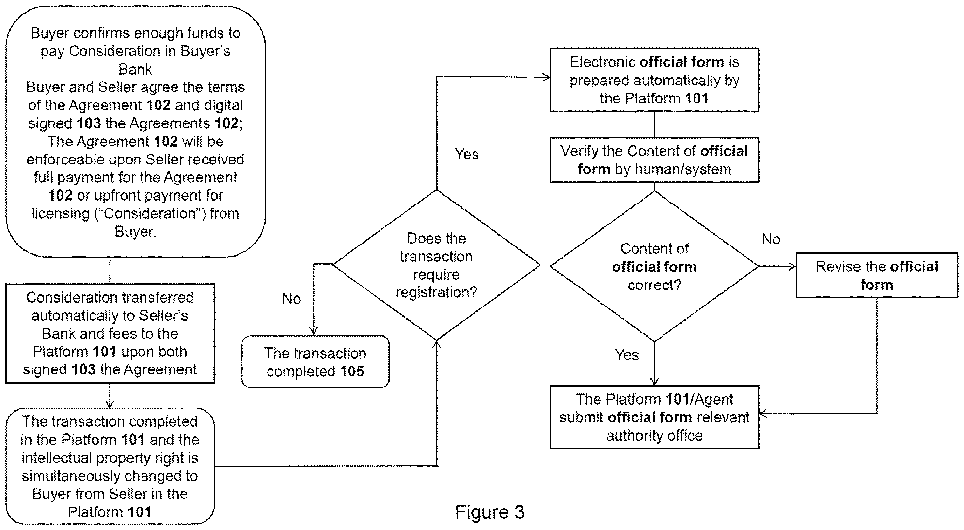

Referring to Figure 3, an agreement between buyer and seller with online payment is shown. The customized digital agreement 102 between buyer and seller is uploaded in the distributed ledger in accordance with the terms of sales and purchases or license agreement. Every corresponding parties could view the same customized digital agreement 102 whereby the buyer and seller can negotiate the terms in the customized digital agreement 102 via online or offline. The buyer's bank will transfer the consideration to seller's bank simultaneously once both buyer and seller digitally sign 103 the customized digital agreement 102 and uploaded to the platform 101 in the distributed ledger. The platform 101 will change the ownership of the intellectual property right from the seller to the buyer upon payment confirmation. Hence, the intellectual property right is released for the buyer to put into the market. The whole process in this distributed ledger is witnessed by all the corresponding parties. The completion 105 of the trade information transaction depends on the necessity of registration in the corresponding intellectual property office. An electronic official form is prepared automatically by the platform 101 if the trade information transaction require registration. Human or system will verify the content of the official form and the platform 101 or agent will submit the official form to relevant authorities office.

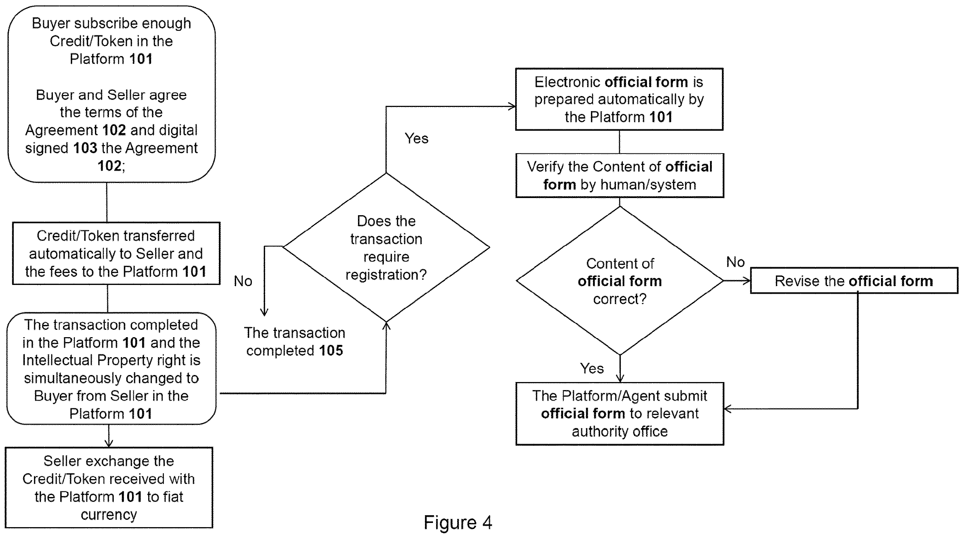

An agreement between buyer and seller with token payment is shown in Figure 4. The buyer must subscribe enough credit or token on the platform 101 in order to complete 105 the transaction. The customized digital agreement 102 between buyer and seller is uploaded to the platform 101 in the distributed ledger in accordance with the terms of sales and purchases or license agreement. Every corresponding parties could view the same customized digital agreement 102 whereby the buyer and seller can negotiate the terms in the customized digital agreement 102 via online or offline. The buyer will transfer the token consideration to the seller simultaneously once both buyer and seller digitally sign 103 the customized digital agreement 102 and uploaded the signed customized digital agreement 102 to the distributed ledger. The platform 101 will change the ownership of the intellectual property right from the seller to the buyer upon payment confirmation. Hence, the intellectual property right is released for buyer to put into the market. Seller exchange the credit or token received with the platform 101 to fiat currency. The whole process in this distributed ledger is witnessed by all the corresponding parties. The completion 105 of the trade information transaction depends on the necessity of registration in the corresponding intellectual property office. An electronic official form is prepared automatically by the platform 101 if the trade information transaction require registration. Human or system will verify the content of the official form and the platform 101 or agent will submit the official form to relevant authorities office.

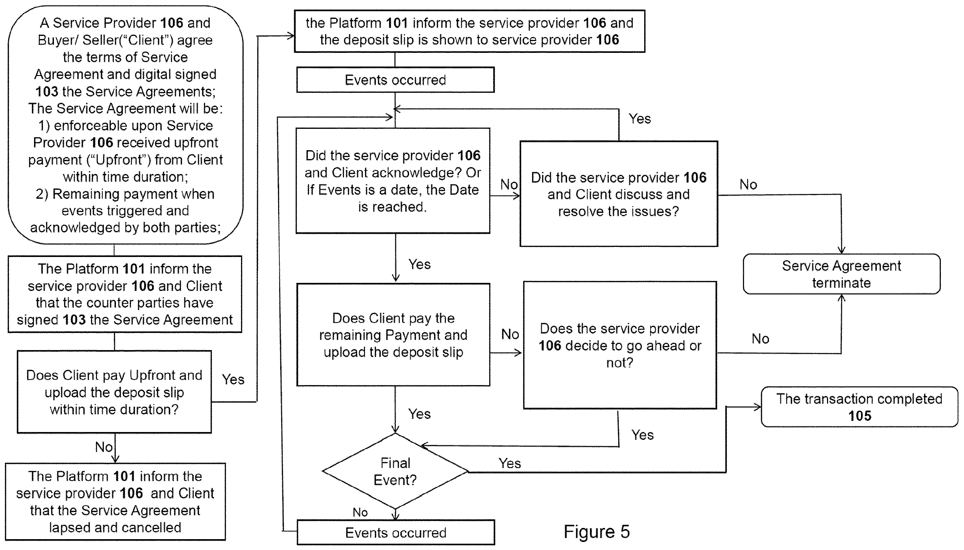

Referring to Figure 5, an agreement between service provider 106 and client of buyer or seller with offline payment is shown. The customized digital agreement 102 between the service provider 106 and client of buyer or seller is uploaded to the platform 101 in the distributed ledger in accordance with the terms of sales and purchases or license agreement. Every corresponding parties could view the same customized digital agreement 102 whereby the respective parties can negotiate the terms in the customized digital agreement 102 via online or offline. The client of buyer or seller has to make first upfront payment in a time duration and upload the proof of payment in the distributed ledger once both service provider 106 and client of buyer and seller digitally sign 103 the service agreement and uploaded the signed service agreement to the distributed ledger. The platform 101 will cancel the transaction if the client of buyer or seller fails to make the payment within the time duration. A serial of events will be triggered one by one upon service provider 106 confirmed the upfront payment from client in the time duration. Said events may refer to any traceable events such as approval by an authority, consent message of satisfaction work done and etcetera. The result will be uploaded to the distributed ledger and the client of buyer or seller need to pay balance payment once the said event completed. The next event will be processed until final event occurs upon service provider 106 confirmed the balance payment for said event. The transaction is considered completed 105 when final event occurred.

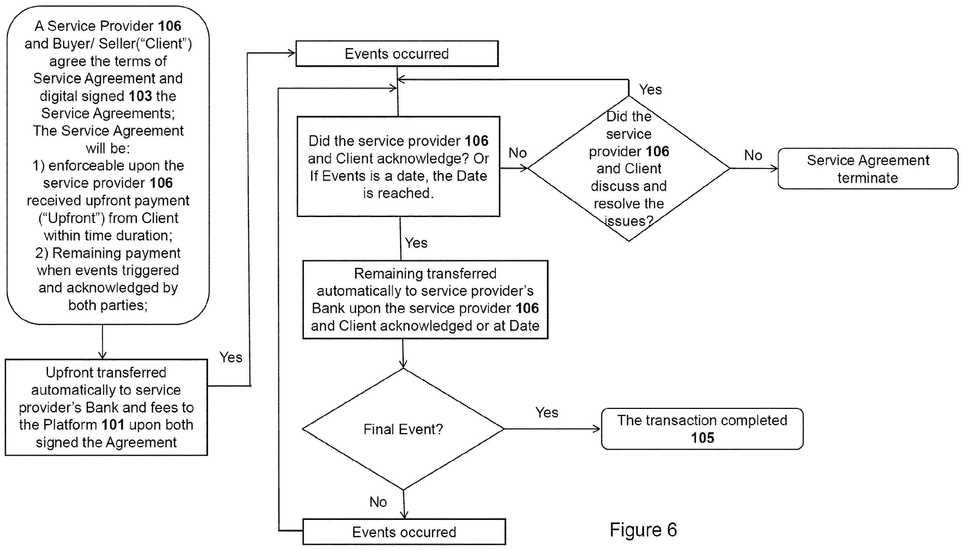

An agreement between service provider 106 and client of buyer or seller with online payment is shown in Figure 6. The customized digital agreement 102 between the service provider 106 and client of buyer or seller is uploaded to the platform 101 in the distributed ledger in accordance with the terms of sales and purchases or license agreement. Every corresponding parties could view the same customized digital agreement 102 whereby the respective parties can negotiate the terms in the customized digital agreement 102 via online or offline. The client's bank will transfer first upfront payment consideration to the seller's bank simultaneously once both service provider 106 and client of buyer or seller digitally sign 103 the service agreement and uploaded the signed service agreement to the distributed ledger. A serial of events will be triggered one by one upon service provider 106 confirmed the first upfront payment from client of buyer or seller in the time duration. Said events may refer to any traceable events such as approval by an authority, consent message of satisfaction work done and etcetera. The result will be uploaded to the distributed ledger and the client's bank will transfer the balance consideration to the seller's bank simultaneously once the event completed. The next event will be processed until final event occur upon service provider 106 confirmed the balanced consideration payment for the event.

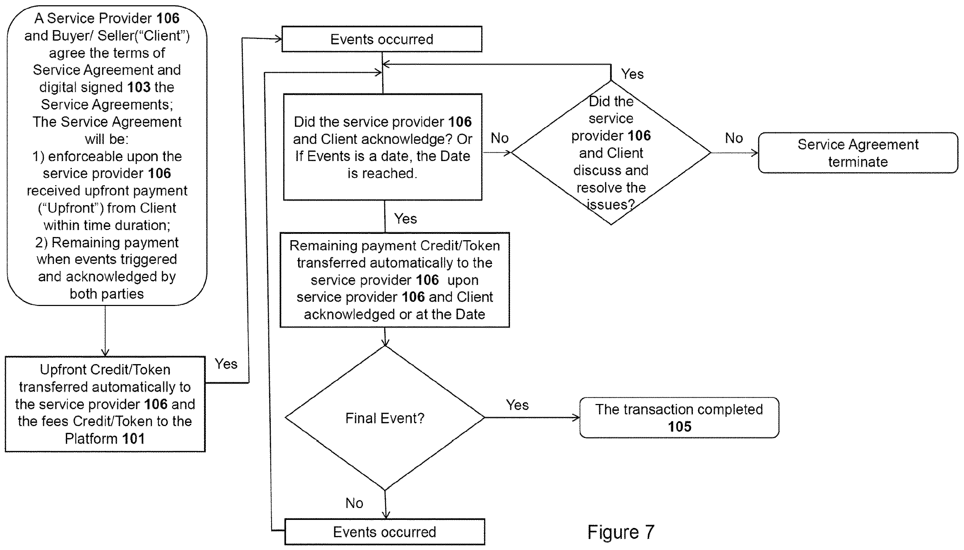

Referring to Figure 7, an agreement between service provider 106 and client of buyer or seller with token payment is shown. The client must subscribe enough credit or token in the platform 101 in order to complete 105 the transaction. The customized digital agreement 102 between the service provider 106 and client of buyer or seller is uploaded to the platform 101 in the distributed ledger in accordance with the terms of sales and purchases or license agreement. Every corresponding parties could view the same agreement whereby the respective parties can negotiate the terms in the customized digital agreement 102 via online or offline. The client's bank will transfer the token equivalent upfront to the seller's bank simultaneously once both service provider 106 and client digitally sign 103 the service agreement and uploaded the signed service agreement to the distributed ledger. The result will be uploaded to the distributed ledger and the client's bank will transfer balance tokens equivalent of the consideration to the seller's bank simultaneously once the event completed. The next event will be processed until final event occurs upon service provider 106 confirmed the balance payment for the event. The seller exchanges the token received with platform 101 to fiat currency anytime.

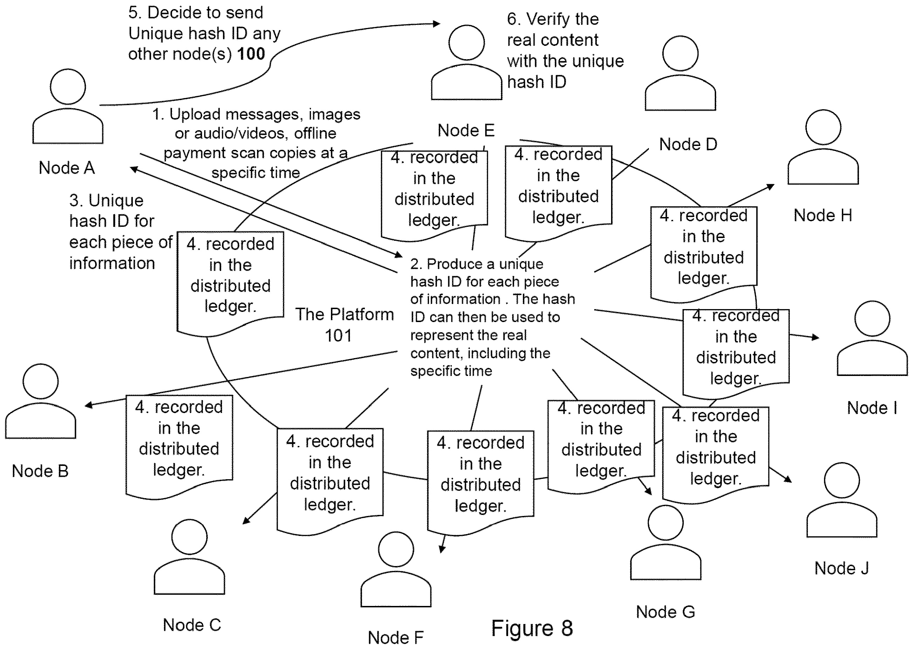

Figure 8 shows a diagram of time stamp and providing hash ID for uploading information and/or document. According to Figure 8, Node A may upload information included but not limited messages, images, audios, videos or offline payment scan copies at a specific time to the platform 101. A unique hash ID for each piece of information is produced wherein the hash ID can be used to represent the real content, including the specific time for uploading the information. The unique hash ID for each piece of information is sent back to Node A. Each hash ID is recorded in the distributed ledger to corresponding nodes such as Node B, Node C, Node D, Node E, Node F, Node G, Node H, Node I and Node J. Node A may decide to send the produced unique hash ID to any other node(s). Everyone can easily verify the real content with the hash ID.

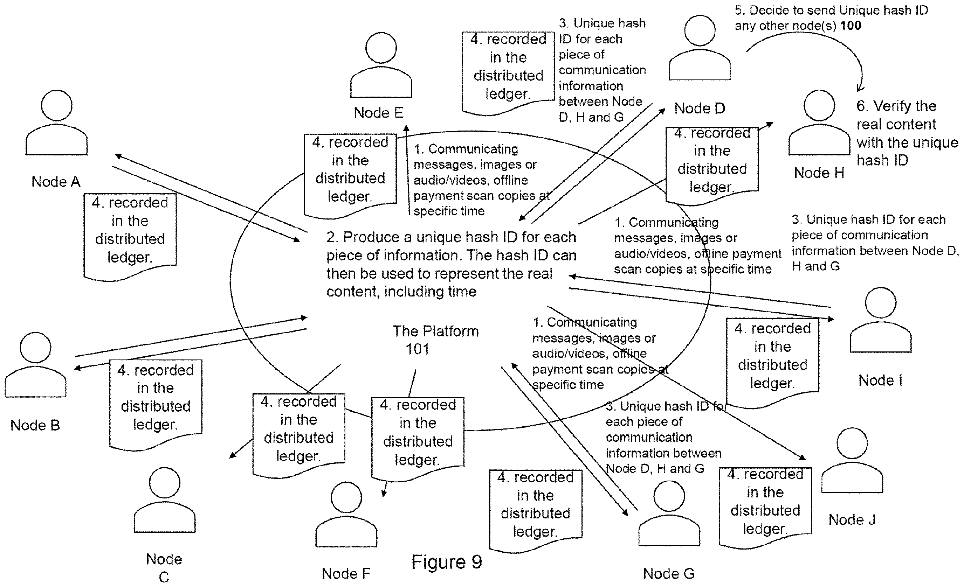

Figure 9 shows a diagram of time stamp and providing hash ID for communicating content on the platform 101. Users such as Node D, Node I and Node G communicate information such as messages, images, audios, videos or offline payment scan copies at a specific time to the platform 101. A unique hash ID for each piece of information is produced. The hash ID is used to represent the real content including the specific time for uploading the information. The produced hash ID can be used in between Node D, I and G. The each hash ID is recorded in the distributed ledger to corresponding nodes such as Node A, Node B, Node C, Node D, Node E, Node F, Node G, Node H, Node I and Node J. Node D may decide to send the produced unique hash ID to any other node(s). Everyone can easily verify the real content with the hash ID.

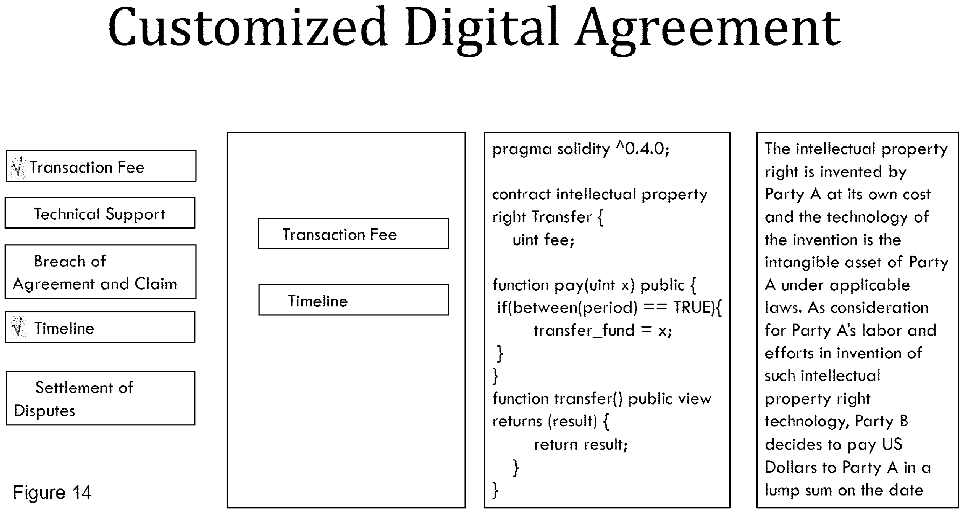

Referring to Figure 14, a diagram of customized digital agreement 102 is shown. A module is created to deal with different kind of legal contract whereby both buyers and sellers can use a drop-down menu to select existing items which have already been fully reviewed by service node 100f and customize the legal terms. The users may only need to fill in basic information such as name, time, amount of fund and etcetera. For example, user of Party B in Figure 14 may select transaction fee and timeline. As such Party B may pay to Party A in a lump sum on a specific date.

Figure 15 shows a diagram example of customized digital agreement 102 in between Node IPN and Node PN. The Node IPN which is intellectual property seller and the Node PN is buyer whereby both can negotiate the terms of sales and purchase agreement on the platform 101, and choose the corresponding clauses from the modular clauses list to compose a customized digital agreement 102. Referring to Figure 15, users could select clause D (payment schedule) and choose the prefer payment module clauses. As such, the customized digital agreement 102 comprises a clause A1, a clause B3, a clause C6, a clause D3 and etcetera in according to selection of both Node IPN and Node PN.

The method and system for time stamping and transferring intellectual property right in present invention is a customized digital module agreement 102. Each step of the trade transaction is recorded in a distributed manner for ensuring corresponding parties able to trace and check the records. Said records would have a strong time stamp proof and serve as a strong legal evidence upon infringement and disputes of intellectual property right occur.

A synchronization mechanism will function so that each node 100 in the platform 101 can update the transaction to its distributed ledger for maintaining multiple backups of the intellectual property exchange trading ledger in the platform 101. Therefore, its advantage of distributed storage is that single point of failure could be avoided. Any node 100 in the platform 101 can take advantage of the synchronization mechanism to easily obtain information from other nodes 100 that they have not received during temporary offline. Therefore, the content that directly or indirectly stored in the distributed intellectual property exchange trading ledger is ensured to be open, complete, consistent and temper-proof.

The technical invention has been described with respect to intellectual property rights by example but is not limited to these. It may as well be applied to time stamping and transfer of other assets.

Although the present invention has been described with reference to specific embodiments, also shown in the appended figures, it will be apparent for those skilled in the art that many variations and modifications can be done within the scope of the invention as described in the specification and defined in the following claims.

## Claims

1. A computer implemented method for intellectual property time stamp and right transfer, wherein:
enrolling a plurality of corresponding nodes (100) to a platform (101);
wherein the corresponding nodes (100) comprises an administration node (100a), a public node (100b), a super node (100c), a child node (100d), an independent individual professor node (100e) and a service node (100f);
uploading information and document of the corresponding intellectual property right to the platform (101) by the independent individual professor node (100e), the super node (100c) or the child node (100d);
wherein time stamping the information and/or document upon uploaded to the platform (101);
searching relevant intellectual property right on the platform (101);
negotiating on the platform (101);
composing a customized digital agreement (102) on the platform (101) by selecting, amending and/or adding on a relevant module clause;
wherein the customized digital agreement (102) comprises smart contract functions for automating execution;
signing (103) the agreed agreement digitally by respective corresponding parties;
blocking (104) the target intellectual property right automatically for further selling; and
completing (105) the trade information transaction upon receiving full payment,
wherein the content of the uploaded information, document and negotiation that involve any communications by nodes (100) is stored in a distributed ledger based on a hash table mapping approach, and wherein each piece of stored information in the distributed ledger comprises a hash 10,
**characterized in that**
said hash ID is used to represent the real content to be mentioned in the transactions later recorded in the distributed ledger for allowing everyone to verify the real content with the hash ID.

2. The computer implemented method for intellectual property time stamp and right transfer according to claim 1, wherein the intellectual property right comprises a patent, a trademark, a trade secret, an industrial design, a copyright and a geographical indication

3. The computer implemented method for intellectual property time stamp and right transfer according to claim 1 or 2, wherein
the administration node (100a) comprises an administrator, the public node (100b) comprises a buyer, the super node (100c) comprises an university and research institute, the service node (100f) comprises a service provider (106), the child node (100d) and the independent individual professor node (100e) comprises an inventor.

4. The computer implemented method for intellectual property time stamp and right transfer according to one of claims 1 to 3, wherein the information and document include but not limited to writing, audio and video.

5. The computer implemented method for intellectual property time stamp and right transfer according to one of claims 1 to 4, wherein the module clause comprises plurality of selection for respective parties to select, amend and/or add.

6. The computer implemented method for intellectual property time stamp and right transfer according to claim 1, wherein the respective parties are optional to engage a service provider (106) for providing services including but not limited to marketing the patent, legal advices, valuation and writing descriptions.

7. The computer implemented method for intellectual property time stamp and right transfer according to claim 1 or 6, wherein
wherein the service provider (106) includes but not limited to legal advisors, intellectual property valuers, writers, promoters, marketers, intellectual property agents, and other intellectual property services.

8. The computer implemented method for intellectual property time stamp and right transfer according to one of claims 1 to 6, wherein the signing (103) of the customized digital agreement (102) comprises an one intellectual property holder with one buyer, an one intellectual property holder with multiple buyers, a multiple intellectual property holders with one buyer; a multiple intellectual property holders with multiple buyers; a service provider with client or buyer or seller and in between the service providers.

9. The computer implemented method for intellectual property time stamp and right transfer according to one of claims 1 to 8, wherein the smart contract functions is triggered fund transfer or other actions automatically after signage (103) of the agreed agreement (102); and
wherein, optionally, the other actions comprise an issue of call option for another intellectual property rights, executing another digital agreement (102) and the like.

10. The computer implemented method for intellectual property time stamp and right transfer according to one of claims 1 to 9, wherein the trade information transaction is change of intellectual property ownership;
and/or
wherein the completion (105) of the trade information transaction depends on the necessity of registration in the corresponding intellectual property office.

11. The computer implemented method for intellectual property time stamp and right transfer according to one of claims 1 to 10, wherein the payment comprises an offline payment, an online payment and a token payment.

12. A system of customized digital agreement for intellectual property time stamp and right transfer for carrying out the method of one of claims 1 to 11, comprising:
means for selecting, amending and/or adding on a relevant module clause; and
means for automating execution using smart contract functions,
wherein content of uploaded information, document and negotiation that involve any communications by nodes (100) is stored in a distributed ledger based on a hash table mapping approach, and wherein each piece of stored information in the distributed ledger comprises a hash ID,
**characterized in that**
said hash ID is used to represent the real content to be mentioned in the transactions later recorded in the distributed ledger for allowing everyone to verify the real content with the hash ID.

13. The system of customized digital agreement for intellectual property time stamp and right transfer according to claim 12, wherein the module clause comprises plurality of selection for respective parties to select, amend and/or add.

14. The system of customized digital agreement for intellectual property time stamp and right transfer according to claim 12 or 13, wherein the smart contract functions is configured to trigger fund transfer or other actions automatically after signage (103) of the agreed agreement (102).

15. The system of customized digital agreement for intellectual property time stamp and right transfer according to claim 14, wherein the other actions comprise an issue of call option for another intellectual property rights, executing another digital agreement (102) and the like.

## Patentansprüche

1. Computerimplementiertes Verfahren zur Zeitstempelung und Rechteübertragung von geistigem Eigentum, wobei:
Registrieren einer Vielzahl von entsprechenden Knoten (100) auf einer Plattform (101);
wobei die entsprechenden Knoten (100) einen Verwaltungsknoten (100a), einen öffentlichen Knoten (100b), einen Superknoten (100c), einen Unterknoten (100d), einen unabhängigen individuellen Professorenknoten (100e) und einen Dienstknoten (100t) umfassen,
Hochladen von Informationen und Dokumenten über das entsprechende geistige Eigentumsrecht auf die Plattform (101) durch den unabhängigen einzelnen Professorenknoten (100e), den Superknoten (100c) oder den Unterknoten (100d);
wobei die Informationen und/oder Dokumente beim Hochladen auf die Plattform (101) mit einem Zeitstempel versehen werden;
Suchen nach relevantem geistigem Eigentumsrecht auf der Plattform (101);
Verhandeln auf der Plattform (101);
Zusammenstellen einer individualisierten digitalen Vereinbarung (102) auf der Plattform (101) durch Auswählen, Ändern und/oder Hinzufügen einer relevanten Modulklausel;
wobei die individualisierte digitale Vereinbarung (102) intelligente Vertragsfunktionen zur Automatisierung der Ausführung umfasst,
Unterzeichnen (103) der vereinbarten Vereinbarung in digitaler Form durch die jeweiligen Vertragspartner;
Automatisches Sperren (104) des intellektuellen Eigentumsrechts des Ziels für den weiteren Verkauf; und
Abschließen (105) der Handelsinformationstransaktion nach Erhalt der vollständigen Zahlung,
wobei der Inhalt der hochgeladenen Informationen, des Dokuments und der Verhandlung, die irgendeine Kommunikation durch Knoten (100) beinhalten, in einem verteilten Hauptbuch basierend auf einem Hash-Tabellen-Zuordnungsansatz gespeichert wird, und wobei jede gespeicherte Information in dem verteilten Hauptbuch eine Hash-ID umfasst,
**dadurch gekennzeichnet, dass**
die besagte Hash-ID verwendet wird, um den tatsächlichen Inhalt zu repräsentieren, der in den später im verteilten Hauptbuch aufgezeichneten Transaktionen erwähnt werden soll, damit jeder den tatsächlichen Inhalt anhand der Hash-ID überprüfen kann.

2. Computerimplementiertes Verfahren zur Zeitstempelung und Rechteübertragung von geistigem Eigentum nach Anspruch 1, wobei das geistige Eigentumsrecht ein Patent, ein Warenzeichen, ein Geschäftsgeheimnis, ein Gebrauchsmuster, ein Urheberrecht und eine geografische Angabe umfasst.

3. Computerimplementiertes Verfahren zur Zeitstempelung und Rechteübertragung von geistigem Eigentum nach Anspruch 1 oder 2, wobei
der Verwaltungsknoten (100a) einen Verwalter umfasst, der öffentliche Knoten (100b) einen Käufer umfasst, der Superknoten (100c) eine Universität und ein Forschungsinstitut umfasst, der Dienstknoten (100f) einen Dienstanbieter (106) umfasst, der Unterknoten (100d) und der unabhängige einzelne Professorenknoten (100e) einen Erfinder umfassen.

4. Computerimplementiertes Verfahren zur Zeitstempelung und Rechteübertragung von geistigem Eigentum nach einem der Ansprüche 1 bis 3, wobei die Informationen und Dokumente Text, Audio und Video umfassen, aber nicht darauf beschränkt sind.

5. Computerimplementiertes Verfahren für Zeitstempelung und Rechteübertragung von geistigem Eigentum nach einem der Ansprüche 1 bis 4, wobei die Modulklausel eine Vielzahl von Auswahlmöglichkeiten für die jeweiligen Parteien zum Auswählen, Ändern und/oder Hinzufügen umfasst.

6. Computerimplementiertes Verfahren zur Zeitstempelung und Rechteübertragung von geistigem Eigentum nach Anspruch 1, wobei die jeweiligen Parteien optional einen Dienstanbieter (106) mit der Erbringung von Dienstleistungen beauftragen können, einschließlich, aber nicht beschränkt auf die Vermarktung des Patents, Rechtsberatung, Bewertung und Erstellung von Beschreibungen.

7. Computerimplementiertes Verfahren zur Zeitstempelung und Rechteübertragung von geistigem Eigentum nach Anspruch 1 oder 6, wobei
zu den Dienstanbietern (106) unter anderem, aber nicht beschränkt auf, Rechtsberater, Gutachter für geistiges Eigentum, Verfasser, Promoter, Vermarkter, Vertreter für geistiges Eigentum und andere Dienste für geistiges Eigentum gehören.

8. Computerimplementiertes Verfahren zur Zeitstempelung und Rechteübertragung von geistigem Eigentum nach einem der Ansprüche 1 bis 6, wobei das Unterzeichnen (103) der individualisierten digitalen Vereinbarung (102) einen Inhaber von geistigem Eigentumsrecht mit einem Käufer, einen Inhaber von geistigem Eigentumsrecht mit mehreren Käufern, mehrere Inhaber von geistigem Eigentumsrecht mit einem Käufer, mehrere Inhaber von geistigem Eigentumsrecht mit mehreren Käufern, einen Dienstanbieter mit Klient oder Käufer oder Verkäufer und zwischen den Dienstanbietern umfasst.

9. Computerimplementiertes Verfahren zur Zeitstempelung und Rechteübertragung von geistigem Eigentum nach einem der Ansprüche 1 bis 8, wobei die intelligenten Vertragsfunktionen nach der Unterzeichnung (103) der vereinbarten Vereinbarung (102) automatisch einen Geldtransfer oder andere Aktionen auslösen; und
wobei die anderen Aktionen optional die Ausgabe einer Kaufoption für ein weiteres geistiges Eigentumsrecht, das Ausführen einer weiteren digitalen Vereinbarung (102) und Ähnliches umfassen.

10. Computerimplementiertes Verfahren zur Zeitstempelung und Rechteübertragung von geistigem Eigentum nach einem der Ansprüche 1 bis 9, wobei es sich bei der Handelsinformationstransaktion um eine Änderung des geistigen Eigentumsrechts handelt;
und/oder
wobei der Abschluss (105) der Handelsinformationstransaktion von der Notwendigkeit der Eintragung beim entsprechenden Amt für geistiges Eigentum abhängt.

11. Computerimplementiertes Verfahren zur Zeitstempelung und Rechteübertragung von geistigem Eigentum nach einem der Ansprüche 1 bis 10, wobei die Zahlung eine Offline-Zahlung, eine Online-Zahlung und eine Token-Zahlung umfasst.

12. System für eine individualisierte digitale Vereinbarung zur Zeitstempelung und Rechteübertragung von geistigem Eigentum zur Durchführung des Verfahrens nach einem der Ansprüche 1 bis 11, umfassend:
Mittel zum Auswählen, Ändern und/oder Hinzufügen einer relevanten Modulklausel; und
Mittel zum Automatisieren der Ausführung unter Verwendung von intelligenten Vertragsfunktionen,
wobei der Inhalt der hochgeladenen Informationen, des Dokuments und der Verhandlung, die irgendeine Kommunikation durch Knoten (100) beinhalten, in einem verteilten Hauptbuch basierend auf einem Hash-Tabellen-Zuordnungsansatz gespeichert wird, und wobei jede gespeicherte Information in dem verteilten Hauptbuch eine Hash-ID umfasst,
**dadurch gekennzeichnet, dass**
die besagte Hash-ID verwendet wird, um den tatsächlichen Inhalt zu repräsentieren, der in den später im verteilten Hauptbuch aufgezeichneten Transaktionen erwähnt werden soll, damit jeder den tatsächlichen Inhalt anhand der Hash-ID überprüfen kann.

13. System für eine individualisierte digitale Vereinbarung zur Zeitstempelung und Rechteübertragung von geistigem Eigentum nach Anspruch 12, wobei die Modulklausel eine Vielzahl von Auswahlmöglichkeiten für die jeweiligen Parteien zum Auswählen, Ändern und/oder Hinzufügen umfasst.

14. System für eine individualisierte digitale Vereinbarung zur Zeitstempelung und Rechteübertragung von geistigem Eigentum nach Anspruch 12 oder 13, wobei die intelligenten Vertragsfunktionen dazu konfiguriert sind, nach der Unterzeichnung (103) der vereinbarten Vereinbarung (102) automatisch einen Geldtransfer oder andere Aktionen auszulösen.

15. System für eine individualisierte digitale Vereinbarung zur Zeitstempelung und Rechteübertragung von geistigem Eigentum nach Anspruch 14, wobei die anderen Aktionen eine Ausgabe einer Kaufoption für andere Rechte an geistigem Eigentum, das Ausführen einer anderen digitalen Vereinbarung (102) und Ähnliches umfassen.

## Revendications

1. Un procédé implémenté par ordinateur pour l'horodatage et le transfert de droits de propriété intellectuelle, dans lequel:
inscrire une pluralité de noeuds correspondants (100) à une plateforme (101);
dans lequel les noeuds correspondants (100) comprennent un noeud d'administration (100a), un noeud public (100b), un super noeud (100c), un noeud enfant (100d), un noeud professeur individuel indépendant (100e) et un noeud de service (100f) ;
télécharger des informations et des documents relatifs aux droits de propriété intellectuelle correspondants sur la plateforme (101) par le noeud professeur individuel indépendant (100e), le super noeud (100c) ou le noeud enfant (100d);
dans lequel horodater des informations et/ou des documents lors de leur téléchargement sur la plateforme (101);
rechercher des droits de propriété intellectuelle pertinents sur la plateforme (101);
négocier sur la plateforme (101);
rédiger un accord numérique personnalisé (102) sur la plateforme (101) en sélectionnant, modifiant et/ou ajoutant une clause de module pertinente;
dans lequel l'accord numérique personnalisé (102) comprend des fonctions de contrat intelligent pour automatiser l'exécution;
signer (103) l'accord convenu numériquement par les parties correspondantes respectives;
bloquer (104) automatiquement le droit de propriété intellectuelle cible en vue d'une vente ultérieure; et
exécuter (105) la transaction d'informations commerciales dès réception du paiement intégral,
dans lequel le contenu des informations, des documents et des négociations téléchargés qui impliquent des communications par des noeuds (100) est stocké dans un registre distribué sur la base d'une approche de mappage de table de hachage, et dans lequel chaque élément d'information stocké dans le registre distribué comprend un identifiant de hachage,
**caractérisé en ce que**
ledit identifiant de hachage est utilisé pour représenter le contenu réel à mentionner dans les transactions enregistrées plus tard dans le registre distribué pour permettre à chacun de vérifier le contenu réel avec l'identifiant de hachage.

2. Le procédé implémenté par ordinateur pour l'horodatage et le transfert de droits de propriété intellectuelle selon la revendication 1, dans lequel le droit de propriété intellectuelle comprend un brevet, une marque, un secret commercial, un dessin industriel, un droit d'auteur et une indication géographique.

3. Le procédé implémenté par ordinateur pour l'horodatage et le transfert de droits de propriété intellectuelle selon la revendication 1 ou 2, dans lequel le noeud d'administration (100a) comprend un administrateur, le noeud public (100b) comprend un acheteur, le super noeud (100c) comprend une université et un institut de recherche, le noeud de service (100f) comprend un fournisseur de services (106), le noeud enfant (100d) et le noeud professeur individuel indépendant (100e) comprend un inventeur.

4. Le procédé implémenté par ordinateur pour l'horodatage et le transfert de droits de propriété intellectuelle selon l'une des revendications 1 à 3, dans lequel les informations et les documents comprennent, mais sans s'y limiter, l'écriture, l'audio et la vidéo.

5. Le procédé implémenté par ordinateur pour l'horodatage et le transfert de droits de propriété intellectuelle selon l'une des revendications 1 à 4, dans lequel la clause de module comprend une pluralité de choix pour que les parties respectives puissent sélectionner, modifier et/ou ajouter.

6. Le procédé implémenté par ordinateur pour l'horodatage et le transfert de droits de propriété intellectuelle selon la revendication 1, dans lequel les parties respectives ont la possibilité d'engager un fournisseur de services (106) pour fournir des services comprenant, mais sans s'y limiter, la commercialisation du brevet, des conseils juridiques, l'évaluation et la rédaction de descriptions.

7. Le procédé implémenté par ordinateur pour l'horodatage et le transfert de droits de propriété intellectuelle selon la revendication 1 ou 6, dans lequel
dans lequel le fournisseur de services (106) comprend, mais sans s'y limiter, des conseillers juridiques, des évaluateurs de propriété intellectuelle, des rédacteurs, des promoteurs, des spécialistes du marketing, des agents de propriété intellectuelle, et d'autres services de propriété intellectuelle.

8. Le procédé implémenté par ordinateur pour l'horodatage et le transfert de droits de propriété intellectuelle selon l'une des revendications 1 à 6, dans lequel la signature (103) de l'accord numérique personnalisé (102) comprend un seul titulaire de propriété intellectuelle avec un seul acheteur, un seul titulaire de propriété intellectuelle avec plusieurs acheteurs, plusieurs titulaires de propriété intellectuelle avec un seul acheteur; plusieurs titulaires de propriété intellectuelle avec plusieurs acheteurs; un fournisseur de services avec un client ou un acheteur ou un vendeur et au milieu les fournisseurs de services.

9. Le procédé implémenté par ordinateur pour l'horodatage et le transfert de droits de propriété intellectuelle selon l'une des revendications 1 à 8, dans lequel les fonctions de contrat intelligent sont déclenchées automatiquement par un transfert de fonds ou d'autres actions après la signature (103) de l'accord convenu (102); et
dans lequel, éventuellement, les autres actions comprennent l'émission d'une option d'achat pour d'autres droits de propriété intellectuelle, l'exécution d'un autre accord numérique (102) et autres.

10. Le procédé implémenté par ordinateur pour l'horodatage et le transfert de droits de propriété intellectuelle selon l'une des revendications 1 à 9, dans lequel la transaction d'informations commerciales est un changement de propriété intellectuelle;
et/ou
dans lequel l'exécution (105) de la transaction d'informations commerciales dépend de la nécessité d'un enregistrement auprès de l'office de propriété intellectuelle correspondant.

11. Le procédé implémenté par ordinateur pour l'horodatage et le transfert de droits de propriété intellectuelle selon l'une des revendications 1 à 10, dans lequel le paiement comprend un paiement hors ligne, un paiement en ligne et un paiement symbolique.

12. Un système d'accord numérique personnalisé pour l'horodatage et le transfert de droits de propriété intellectuelle pour la mise en oeuvre du procédé selon l'une des revendications 1 à 11, comprenant:
des moyens pour sélectionner, modifier et/ou ajouter une clause de module pertinente; et des moyens pour automatiser l'exécution en utilisant des fonctions de contrat intelligent,
dans lequel le contenu des informations, des documents et des négociations téléchargés qui impliquent des communications par des noeuds (100) est stocké dans un registre distribué sur la base d'une approche de mappage de table de hachage, et dans lequel chaque élément d'information stocké dans le registre distribué comprend un identifiant de hachage,
**caractérisé en ce que**
ledit identifiant de hachage est utilisé pour représenter le contenu réel à mentionner dans les transactions enregistrées plus tard dans le registre distribué pour permettre à chacun de vérifier le contenu réel avec l'identifiant de hachage.

13. Le système d'accord numérique personnalisé pour l'horodatage et le transfert de droits de propriété intellectuelle selon la revendication 12, dans lequel la clause de module comprend une pluralité de choix pour que les parties respectives puissent sélectionner, modifier et/ou ajouter.

14. Le système d'accord numérique personnalisé pour l'horodatage et le transfert de droits de propriété intellectuelle selon la revendication 12 ou 13, dans lequel les fonctions de contrat intelligent sont configurées de manière à déclencher automatiquement un transfert de fonds ou d'autres actions après la signature (103) de l'accord convenu (102).

15. Le système d'accord numérique personnalisé pour l'horodatage et le transfert de droits de propriété intellectuelle selon la revendication 14, dans lequel les autres actions comprennent l'émission d'une option d'achat pour d'autres droits de propriété intellectuelle, l'exécution d'un autre accord numérique (102) et autres.
